# EUROPÄISCHE PATENTSCHRIFT

(11) **EP 1 561 294 B1**
(45) Veröffentlichungstag und Bekanntmachung des Hinweises auf die Patenterteilung: **22.03.2006**
(21) Anmeldenummer: 02791573.5
(22) Anmeldetag: 06.11.2002
(51) Int. Cl.: H04B 10/10, G08C 23/04

(54) **VERFAHREN ZUR INFRAROT-DATENÜBERTRAGUNG**
METHOD FOR CARRYING OUT INFRARED DATA TRANSMISSION
PROCEDURE POUR TRANSMETTRE DES DONNEES PAR INFRAROUGE

(43) Veröffentlichungstag der Anmeldung: 10.08.2005
(73) Patentinhaber: Ruwido Austria Gesellschaft M.B.H., 5202 Neumarkt a.W. (AT)
(72) Erfinder: JÄKEL, Günter, 83257 Gollenshausen (DE)
(74) Vertreter: Hübscher, Helmut
(86) Internationale Anmeldenummer: PCT/AT2002/000310
(87) Internationale Veröffentlichungsnummer: WO 2004/042966

(56) Entgegenhaltungen:
- EP-A- 0 920 891
- WO-A-00/28501
- DE-A- 3 624 507
- FR-A- 2 674 658
- US-A- 5 098 110

## Beschreibung

### Technisches Gebiet

Die Erfindung bezieht sich auf ein Verfahren zur Infrarot-Datenübertragung zwischen mehreren Sendeeinheiten und einer gemeinsamen Empfangsstation, wobei die einzelnen Sendeeinheiten die zu übertragenden Daten blockweise mit zeitlichem Abstand voneinander an die Empfangsstation senden.

### Stand der Technik

Um eine Basisstation, beispielsweise einen Rechner, Audio- oder Videoanlagen, Spielkonsolen od. dgl., von mehreren Bediengeräten über eine Infrarot-Datenübertragung ansteuern zu können, muß gewährleistet werden, daß die von den einzelnen Bediengeräten gesendeten Daten, die blockweise übertragen werden, unbeeinträchtigt von der Datenübertragung anderer Bediengeräte von der Basisstation empfangen werden können. Aus diesem Grunde werden bei bekannten Infrarot-Übertragungsverfahren den einzelnen Sendeeinheiten der Bediengeräte unterschiedliche Trägerfrequenzen zugeordnet oder die Datenblöcke von den Sendeeinheiten in zeitlichen Abständen nacheinander gesendet, was jeweils mit einem entsprechenden Aufwand verbunden ist. Während beim Einsatz unterschiedlicher Trägerfrequenzen nicht nur unterschiedliche Sendeeinheiten, sondern auch auf die jeweiligen Trägerfrequenzen abgestimmte Empfangseinheiten in der Basisstation erforderlich werden, bedarf es für ein zeitlich abgestuftes Senden der zu Datenblöcken zusammengefaßten Daten einer entsprechenden Steuerung der Sendeeinheiten der Bediengeräte von der Empfangsstation aus, was auf der Seite der Empfangsstation eine entsprechende Sendeeinheit und auf der Seite der Sendeeinheiten zusätzliche Empfangseinheiten für die gegenseitige zeitliche Abstimmung der Bediengeräte erforderlich macht, obwohl in vielen Anwendungsfällen Daten lediglich von den Bediengeräten zur Basisstation zu übertragen sind.

Um einen sicheren Empfang der von mehreren Bediengeräten an eine gemeinsame Basisstation gesendeten Daten zu gewährleisten, ohne den Bediengeräten gesonderte Trägerfrequenzen zuzuordnen oder die Sendeeinheiten der Bediengeräte zu synchronisieren, ist es schließlich bekannt (DE 36 24 507 A1), die zu übertragenden Daten wiederholt in vorgegebenen zeitlichen Abständen zu senden, die für jedes Bediengerät unterschiedlich gewählt werden. Damit ist zwar der vollständige Empfang der Daten jedes Bediengerätes gewährleistet, doch sind die Bediengeräte mit einem entsprechend längeren zeitlichen Abstand zwischen der Datenabgabe erheblich benachteiligt. Aus diesem Grunde wurde vorgeschlagen, die zwischen den Sendepulsen liegenden Sendepausen für jede Sendeeinheit unterschiedlich zu wählen, so daß sich für jede Sendeeinheit ein unterschiedliches Muster an unterschiedlichen Sendepausen ergibt. Damit erhöht sich allerdings der Konstruktionsaufwand für die Sendeeinheiten. Außerdem ist keine blockweise Datenübertragung möglich.

### Darstellung der Erfindung

Der Erfindung liegt somit die Aufgabe zugrunde, ein Verfahren zur Infrarot-Datenübertragung zwischen mehreren Sendeeinheiten und einer gemeinsamen Empfangsstation der eingangs geschilderten Art so auszugestalten, daß mit einem geringen Aufwand eine sichere Datenübertragung möglich wird, ohne unterschiedliche Trägerfrequenzen einsetzen oder die Sendeeinheiten von der gemeinsamen Empfangsstation her ansteuern zu müssen.

Die Erfindung löst die gestellte Aufgabe dadurch, daß die jeweils zu übertragenden Datenblöcke in einem für alle Sendeeinheiten gleich langen Sendeintervall entsprechend der maximalen Anzahl der Sendeeinheiten wiederholt gesendet werden, wobei sich die Länge der für alle Sendeeinheiten unterschiedlichen Wiederholungsintervalle zumindest um die doppelte Sendezeit für eine maximale Datenblockgröße unterscheiden, und daß das kürzeste Wiederholungsintervall wenigstens dem der maximalen Anzahl der Sendeeinheiten entsprechenden Vielfachen der doppelten Sendezeit für eine maximale Datenblockgröße entspricht.

Da zufolge dieser Maßnahmen die zu Datenblöcken zusammengefaßten Daten innerhalb eines vorgegebenen Sendeintervalls mehrmals gesendet werden, und zwar in einer der maximalen Anzahl der Sendeeinheiten entsprechenden Anzahl, muß unter der Voraussetzung, daß sich die Wiederholungsintervalle der einzelnen Sendeeinheiten um ein vorgegebenes Mindestmaß in ihrer Länge unterscheiden, jeder von einer Sendeeinheit übersandte Datenblock zumindest einmal in seiner vollen Länge unbeeinflußt von Datenübertragungen der anderen Sendeeinheiten von der Empfangsstation empfangen werden. Da bei einer vorgegebenen maximalen Datenblocklänge ein zeitlicher Versatz zweier von verschiedenen Sendeeinheiten gesendeten Datenblöcken bis zu einem Ausmaß der Sendezeit für einen Datenblock zu einem überlappenden Empfang der beiden Datenblöcke in der Empfangsstation führt, muß der Mindestabstand zwischen den Wiederholungsintervallen der einzelnen Sendeeinheiten der doppelten Sendezeit für eine maximale Datenblockgröße entsprechen. Außerdem darf das kürzeste Wiederholungsintervall nicht kürzer als das der maximalen Anzahl der Sendeeinheiten entsprechende Vielfache der doppelten Sendezeit für eine maximale Datenblockgröße sein, weil sonst die Datenblöcke aller Sendeeinheiten mit den erforderlichen Sicherheitsabständen entsprechend der Datenblocklänge nicht ohne gegenseitige Überlappung innerhalb des kürzesten Wiederholungsintervalls gesendet werden können, was jedoch eine Voraussetzung für eine zumindest einmalige überlappungsfreie Übertragung jedes Datenblockes unabhängig von der jeweiligen Sendezeit der Sendeeinheiten ist. Enthalten die Datenblöcke in üblicher Weise jeweils eine Kennung für die Sendeeinheit, von denen sie gesandt wurden, so wird in einfacher Weise eine sichere, einseitige Datenübertragung von den Sendeeinheiten zur Empfangsstation möglich, und zwar unabhängig von der jeweiligen Sendezeit der Sendeeinheiten. Zwischen der Übertragung unterschiedlicher Datenblöcke von einer Sendeeinheit aus muß allerdings das vorgegebene Sendeintervall eingehalten werden.

Um Sendeeinheiten zur Infrarot-Datenübertragung an eine gemeinsame Empfangsstation entsprechend dem erfindungsgemäßen Verfahren steuern zu können, müssen die zu übertragenden, in einem Datenblock zusammengefaßten, in einem Speicher jeder Sendeeinheit abgelegten Daten über eine Steuereinheit wiederholt zur Übertragung an die Empfangsstation an die Sendeeinheit ausgelesen werden, wobei das Wiederholungsintervall programmbedingt in Abhängigkeit von der Anzahl der Sendeeinheiten und der Datenblocklänge vorgegeben ist, und zwar für jede Sendeeinheit unterschiedlich, weil ja diese Wiederholungsintervalle eine zeitliche Abstufung in Abhängigkeit von der Datenblocklänge aufweisen müssen. Durch die den einzelnen Sendeeinheiten zugeordneten Zeitglieder können die in ihrer Länge aufeinander abgestimmten Wiederholungsintervalle der einzelnen Sendeeinheiten ohne weiteres vorgegeben werden. Die zu übertragenden Daten können in herkömmlicher Weise mit Hilfe einer Eingabeeinrichtung in den Speicher eingelesen werden, die sehr unterschiedlich aufgebaut sein kann und beispielsweise aus einer Tastatur, einer Maus oder einem Steuerhebel bestehen kann.

### Kurze Beschreibung der Zeichnung

Anhand der Zeichnung wird das erfindungsgemäße Verfahren näher erläutert. Es zeigen
- Fig.1.: eine erfindungsgemäße Einrichtung zur Infrarot-Datenübertragung zwischen mehreren Sendeeinheiten und einer gemeinsamen Empfangsstation in einem vereinfachten Blockschaltbild,
- Fig. 2: einen gemäß eines zu übertragenden Datenblocks modulierten Infrarot-Trägerstrahls,
- Fig. 3: ein mögliches Sendeprotokoll für vier mit einer gemeinsamen Basisstation zusammenwirkende Sendeeinheiten und
- Fig. 4: das gemäß dem Sendeprotokoll nach der Fig. 3 von der Empfangsstation empfangene Infrarot-Signal.

### Weg zur Ausführung der Erfindung

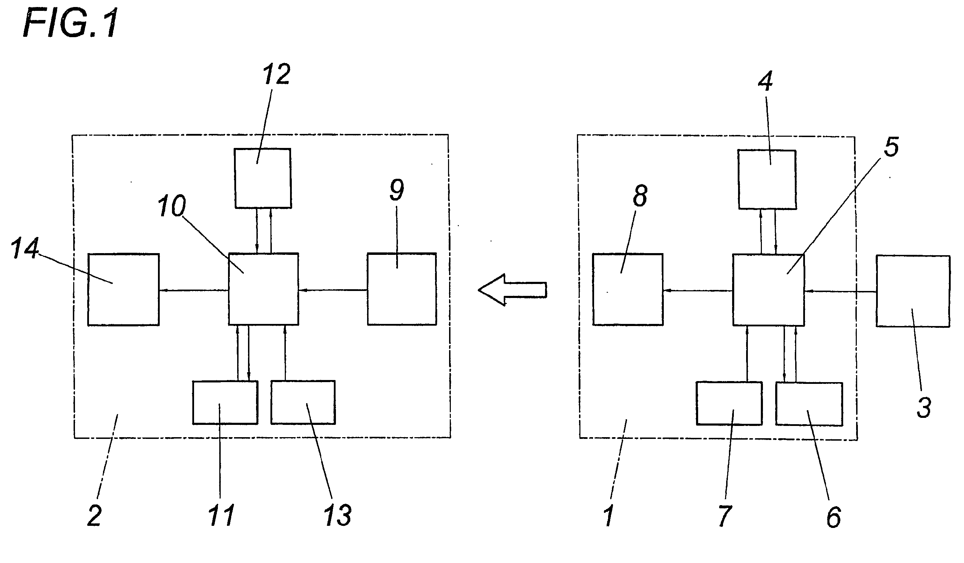

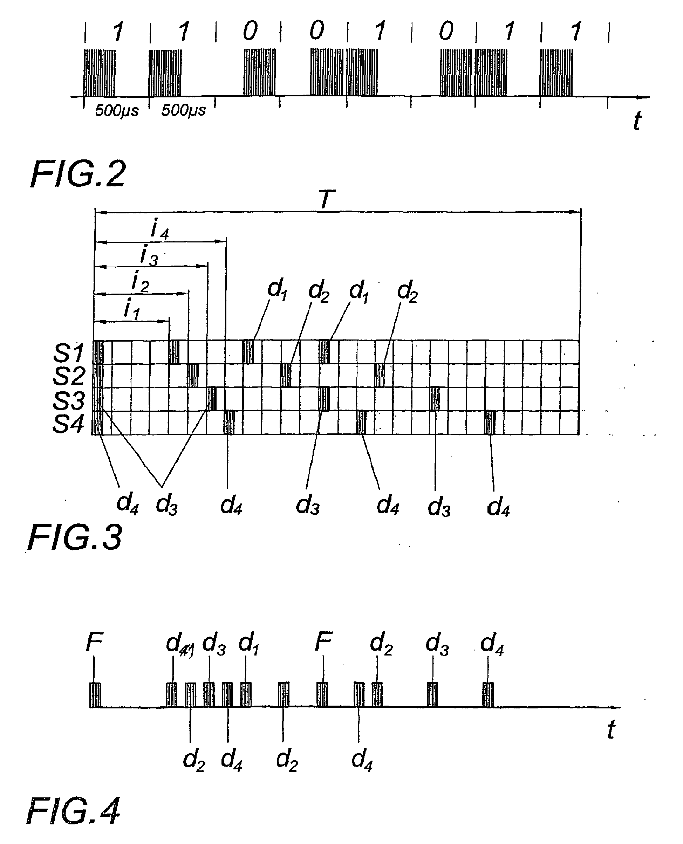

Nach dem Ausführungsbeispiel gemäß der Fig. 1, in der von mehreren Empfangseinheiten 1 lediglich eine dargestellt ist, werden die von den einzelnen Sendeeinheiten 1 an eine gemeinsame Empfangsstation 2 zu übertragenden Daten über eine Eingabeeinrichtung 3 in einen Speicher 4 eingelesen, und zwar mittels einer Steuereinheit 5, die einerseits an einem Programmspeicher 6 und anderseits an ein Zeitglied 7 angeschlossen ist. Über diese Steuereinrichtung 5 werden die abgespeicherten Daten in Abhängigkeit vom jeweils vorgegebenen Programm zu einem Datenblock zusammengefaßt und zur Übertragung an die Empfangsstation 2 an eine Sendestufe 8 weitergeleitet. In dieser Sendestufe 8. wird ein Infrarot-Träger entsprechend dem zu übertragenden Datenblock moduliert, wie dies beispielsweise in der Fig. 2 angedeutet ist. Aus der Fig. 2 ist erkennbar, daß durch die Modulation der Trägerfrequenz beispielsweise von 56 kHz eine Folge von 8 Bits mit einer Periode von 500 µs erhalten wird, wobei sich jedes Bit aus einer Impulsfolge und einer Impulspause von je 250 µs zusammensetzt, so daß sich beispielsweise einem Bit aus einer Impulsfolge mit anschließender Pause eine logische "1" und einem Bit mit einer der Impulsfolge vorgeordneten Pause eine logische "0" zugeordnet werden können. Die einzelnen Bits der in Fig. 2 dargestellten Bit-Folge sind bestimmten, zu übertragenden Informationen zugeordnet. So bildet das in der Bit-Folge erste Bit beispielsweise einen Startbefehl für die Empfangseinheit 2, während die beiden anschließenden Bits die Kennung für die einzelnen Sendeeinheiten 1 beinhalten, was für vier Sendeeinheiten 1 zwei Bits erfordert. Da der Datenblock entsprechend der Fig. 2 nicht nur einmal, sondern mehrmals gesandt wird, und zwar bei vier Sendeeinheiten 1 viermal, können die folgenden zwei Bits die jeweilige Wiederholungszahl wiedergeben, während die letzten drei Bits die eigentlich zu übertragende Information enthalten, wie sie über die Eingabeeinrichtung 3 eingegeben wurde. Diese letzten drei Bits können beispielsweise den Code einer gedrückten Taste wiedergeben.

In der Fig. 3 ist das zeitliche Sendeprotokoll von vier Sendeeinheiten 1 unter der für die Übertragung ungünstigen Annahme dargestellt, daß alle Sendeeinheiten S1 bis S4 gleichzeitig gestartet werden, so daß die innerhalb eines Sendeintervalls T von den einzelnen Sendeeinheiten S1 bis S4 ausgesandten Datenblöcken d1 bis d4 gleichzeitig in der Empfangsstation 2 ankommen, was zu einem nicht auswertbaren Signal F gemäß der Fig. 4 führt. Die Datenblöcke d1 bis d4 werden jedoch nicht nur einmal, sondern entsprechend der Anzahl der Sendeeinheiten, also viermal, gesendet, wobei sich die Wiederholungsintervalle i1 bis i4 in ihrer Länge unterscheiden, und zwar zumindest um die doppelte Sendezeit der Datenblöcke d1, bis d4. Das kleinste Wiederholungsintervall i1 entspricht dabei zumindest dem Vierfachen der doppelten Datenblocklänge, wie dies der Fig. 3 entnommen werden kann. Unter diesen Voraussetzungen wird unabhängig von der jeweiligen Startzeit der einzelnen Sendeeinheiten S1 bis S4 sichergestellt, daß im vorgegebenen Sendeintervall T jeder Datenblock d1 bis d4 zumindest einmal vollständig und ohne Beeinträchtigung durch Datenblöcke anderer Sendeeinheiten an die Empfangsstation 2 übertragen wird. Gemäß der Annahme nach der Fig. 3 ergeben sich hinsichtlich der gesendeten Datenblöcke d1 bis d4 nur zwei Fehlübertragungen, wie sie in der Fig. 4 mit F bezeichnet sind.

Die von den einzelnen Sendeeinheiten 1 in der beschriebenen Weise übertragenen Datenblöcke d1 bis d4 werden in der Empfangsstation 2 über eine allen Sendeeinheiten 1 gemeinsame Empfangsstufe 9 empfangen und einer Auswerteschaltung 10 zugeführt, die an einem entsprechenden Programmspeicher 11 angeschlossen ist, um die ankommenden Datenblöcke zuordnen und entschlüsseln zu können. Diese Auswerteschaltung 10 ist in üblicher Weise wieder mit einem Datenspeicher 12 sowie mit einem Zeitglied 13 verbunden, um eine entsprechende Datenverarbeitung sicherstellen zu können. Über eine Ausgabeeinrichtung 14 können dann die empfangenen Daten zur Steuerung der angeschlossenen Basisstation weitergeleitet werden.

## Patentansprüche

1. Verfahren zur Infrarot-Datenübertragung zwischen mehreren Sendeeinheiten und einer gemeinsamen Empfangsstation, wobei die einzelnen Sendeeinheiten die zu übertragenden Daten blockweise mit zeitlichem Abstand voneinander an die Empfangsstation senden, **dadurch gekennzeichnet, daß** die jeweils zu übertragenden Datenblöcke in einem für alle Sendeeinheiten gleich langen Sendeintervall (T) entsprechend der maximalen Anzahl der Sendeeinheiten wiederholt gesendet werden, wobei sich die Lange der für alle Sendeeinheiten unterschiedlichen Wiederholungsintervalle (i1 bis i4) zumindest um die doppelte Sendezeit für eine maximale Datenblockgröße unterscheiden, und daß das kürzeste Wiederholungsintervall wenigstens dem der maximalen Anzahl der Sendeeinheiten entsprechenden Vielfachen der doppelten Sendezeit für eine maximale Datenblockgröße entspricht.

2. Einrichtung zur Infrarot-Datenübertragung zwischen mehreren Sendeeinheiten und einer gemeinsamen Empfangsstation wobei den Sendeeinheiten einerseits Speicher für die jeweils zu einem zu übertragenden Datenblock zusammenfaßbaren Daten und anderseits an Zeitglieder angeschlossene Steuereinheit zum Auslesen der zu übertragenden Datenblökke aus den Speichern zugeordnet sind, **dadurch gekennzeichnet, daß** die Speicher (4) für die zu übertragenden Datenblöcke (d) in einem hinsichtlich seiner Dauer vorgegebenen Sendeintervall (T) in Abhängigkeit von der Anzahl der Sendeeinheiten (1) wiederholt an die Sendeeinheiten (1) in für jede Sendeeinheit (1) unterschiedlichen Wiederholungsintervallen (i1 bis i4) auslesbar sind, die sich von einem von der Anzahl der Sendeeinheiten (1) und der doppelten Sendezeit für einen Datenblock abhängigen Mindestintervall (i1) stufenweise um wenigstens die doppelte Sendezeit für einen Datenblock verlängern.

## Claims

1. Method for carrying out infrared data transmission between a plurality of sending units and a shared receiving station wherein the individual sending units send the data to be transmitted in blocks to the receiving station with a time interval in respect of each other, **characterised in that** the data blocks to be transmitted are repeatedly sent at a sending interval (T) of equal length for all sending units corresponding to the maximum number of sending units wherein the length of the repetition intervals (i1 to i4) differing for all sending units differ at least by double the sending time for a maximum data block size and **in that** the shortest repetition interval corresponds at least to a multiple corresponding to the maximum number of sending units of double the sending time for a maximum data block size.

2. Device for carrying out infrared data transmission between a plurality of sending units and a shared receiving station wherein on the one hand storage devices for the data intended to be brought together to form a data block to be transmitted and on the other hand control units connected to timing elements for reading out the data blocks to be transmitted from the storage devices are assigned to the sending units, **characterised in that** the storage devices (4) for the data blocks (d) to be transmitted are adapted to be read out in a sending interval (T) predefined in relation to its duration in dependence upon the number of sending units (1) repeatedly in respect of the sending units (1) in repetition intervals (i1 to i4) which differ for each sending unit (1) which are extended by a minimum interval (i1) dependent upon the number of sending units (1) and double the sending time for a data block in stages by at least double the sending time for a data block.

## Revendications

1. Procédé pour la transmission de données par infrarouge entre plusieurs unités émettrices et une station réceptrice commune, les différentes unités émettrices émettant les données à transmettre par blocs, avec un espacement temporel les uns vis-à-vis des autres, à la station réceptrice, **caractérisé en ce que** les blocs de données chaque fois à transmettre sont envoyés de façon répétée, de manière correspondante au nombre maximal d'unités émettrices, dans un intervalle d'émission (T) de même longueur pour toutes les unités émettrices, sachant que la longueur des intervalles de répétition (i1 à i4), différents pour toutes les unités émettrices, se distingue, au moins de la valeur de la durée d'émission doublée, pour une taille de bloc de données maximale, et **en ce que** l'intervalle de répétition le plus court correspond au moins au multiple, correspondant au nombre maximal d'unités émettrices, de la durée d'émission doublée, pour une taille de bloc de données maximale.

2. Dispositif pour la transmission de données par infrarouge entre plusieurs unités émettrices et une station réceptrice commune, sachant qu'aux unités émettrices, d'une part, sont associées des mémoires pour les données, regroupables chaque fois en un bloc de données à transmettre et, d'autre part, des unités de commande, raccordée à des organes temporels, pour l'extraction, depuis les mémoires, des blocs de données à transmettre, **caractérisé en ce que**, en un intervalle d'émission (T), de durée prédéterminée, les mémoires (4), pour les blocs de données (d) à transmettre, sont susceptibles d'être lues, de façon répétitive, en fonction du nombre des unités émettrices (1), pour fournir leur contenu aux unités émettrices (1), en des intervalles de répétition (i1 à i4) différents pour chaque unité émettrice (1), intervalles de répétition qui se prolongent par échelons, d'une durée d'au moins le double de la durée d'émission pour un bloc de données, en partant d'un intervalle minimal (il), dépendant du nombre d'unités émettrices (1) et de la durée d'émission doublée pour un bloc de données.
